# EUROPÄISCHE PATENTANMELDUNG

(11) **EP 3 322 073 A1**
(43) Veröffentlichungstag der Anmeldung: **16.05.2018**
(21) Anmeldenummer: 17200115.8
(22) Anmeldetag: 06.11.2017
(51) Int. Cl.: H02K 15/16, H02K 7/04

(54) **POSITIVES WUCHTEN EINES LÄUFERS**

(30) Priorität: 14.11.2016 DE 102016121766
(71) Anmelder: Rausch und Pausch GmbH, 95100 Selb (DE)
(72) Erfinder: FLEISCHMANN, Ernst, 95100 Selb (DE); KEMNITZ, Rocco, 95100 Selb (DE)
(74) Vertreter: Klunker IP Patentanwälte PartG mbB

(57) **Zusammenfassung**

Die vorliegende Erfindung ist gerichtet auf ein Verfahren zum Herstellen eines positiv wuchtbaren Innenläufers zur Verwendung in einem Elektromotor, insbesondere einem Gleichstrom-Elektromotor, welches es ermöglicht, dass die Baugruppe derart ausgestaltet wird, dass ein Auswuchten des Innenläufers mit besonders geringem technischem Aufwand und besonders sauber vonstatten gehen kann. Die Erfindung ist ferner gerichtet auf eine Fertigungsvorrichtung, welche eingerichtet ist, das vorgeschlagene Verfahren auszuführen bzw. welche mittels des vorgeschlagenen Verfahrens betrieben werden kann. Ferner ist die vorliegende Erfindung gerichtet auf einen Innenläufer zur Verwendung in einem Elektromotor sowie auf den Elektromotor an sich. Ferner wird ein Computerprogrammprodukt vorgeschlagen, mit Steuerbefehlen, welche das vorgeschlagene Verfahren implementieren bzw. die vorgeschlagene Fertigungsvorrichtung betreiben.

## Beschreibung

Die vorliegende Erfindung ist gerichtet auf ein Verfahren zum Herstellen eines positiv wuchtbaren Innenläufers zur Verwendung in einem Elektromotor, insbesondere einem Gleichstrom-Elektromotor, welches es ermöglicht, dass die Baugruppe derart ausgestaltet wird, dass ein Auswuchten des Innenläufers mit besonders geringem technischem Aufwand und besonders sauber vonstatten gehen kann. Die Erfindung ist ferner gerichtet auf eine Fertigungsvorrichtung, welche eingerichtet ist, das vorgeschlagene Verfahren auszuführen bzw. welche mittels des vorgeschlagenen Verfahrens betrieben werden kann. Ferner ist die vorliegende Erfindung gerichtet auf einen Innenläufer zur Verwendung in einem Elektromotor sowie auf den Elektromotor an sich. Ferner wird ein Computerprogrammprodukt vorgeschlagen, mit Steuerbefehlen, welche das vorgeschlagene Verfahren implementieren bzw. die vorgeschlagene Fertigungsvorrichtung betreiben.

DE 10 2013 013 650 A1 zeigt einen drehbar gelagerten Rotationskörper, insbesondere ein Lüfterrad mit einer Einrichtung zum Auswuchten, gekennzeichnet durch mindestens einen in dem Rotationskörper angeordneten Hohlraum zum Einbringen einer Wuchtsubstanz sowie durch eine in dem Hohlraum angeordnete, spezielle Wuchtsubstanz. Hierbei wird jedoch auch auf einen Lüfter abgestellt, welcher grundsätzlich andere Eigenschaften aufweist als ein Innenläufer.

DE 20 2011101568 U1 zeigt eine elektrische Maschine mit einem Stator und einem relativ hierzu rotierbaren Rotor, wobei der Rotor eine Rotorwelle mit einem Magnetkörper sowie mindestens eine Wuchtscheibe umfasst und drehbar in einem von einer stromdurchflossenen Spule erzeugten magnetischen Feld des Stators angeordnet ist.

DE 10 2012 000 497 A1 zeigt ein Rotationsbauteil, dessen Massekörper zur Verbesserung seiner Massensymmetrie bezüglich seiner Rotationsachse mit wenigstens einem Wuchtgewicht versehen ist, wobei das wenigstens eine Wuchtgewicht aus einem in einem Lötprozess auf dem Massenkörper aufgetragene Lot gebildet ist.

Gemäß bekannten Verfahren werden rotatorische elektrische Maschinen bereitgestellt, beispielsweise permanent erregte Gleichstrom-Elektromotoren für eine Anwendung im Kraftfahrzeugbereich. Hierbei besitzt der Motor einen aus einem Blechpaket aufgebauten Rotor mit flusskonzentriert im Blechpaket angeordneten Dauermagneten. Die Dauermagnete werden dazu in stirnseitige Öffnungen in das Blechpaket eingeschoben. Um die Dauermagnete unter den Betriebslasten und über der Lebensdauer der elektrischen Maschine gegen Verlieren zu sichern, wird das mit den Dauermagneten bestückte Rotorblechpaket mit einem thermoplastischen Kunststoff umspritzt.

Je nach Anwendung und Betriebsbedingungen muss die rotierende Baugruppe ausgewuchtet werden. Dies ist notwendig, um durch eine unsymmetrische Masseverteilung verursachte störende Anregungen zu vermeiden. Generell wird zwischen positivem Wuchten, also Material hinzufügen, und negativem Wuchten, also Material abtragen, unterschieden. Negatives Wuchten verursacht prozessbedingt Verunreinigungen, da Material abgetragen und somit losgelöst wird. Dieses abgetragene Material darf nicht verschleppt werden und die Baugruppe verunreinigen. Bezüglich der Sauberkeit in der Montage ist dieses Wuchtprinzip daher von Nachteil.

Beim positiven Wuchten besteht die Herausforderung darin, das hinzugefügte Material ausreichend fest über allen Betriebsbedingungen und der Lebensdauer zu befestigen. Gemäß herkömmlicher Verfahren ist es besonders nachteilig, dass beispielsweise bei einem negativen Wuchten während eines Fräsens oder eines Bohrvorgangs das abgetragene Material in die Baugruppe derart eindringen kann, dass hierbei Verunreinigungen, welche den Betrieb des Elektromotors stören, entstehen. Zudem ist ggf. eine Schwächung des Trägermaterials zu berücksichtigen, da Masse von Bauelementen abgetragen wird, welche in besonders nachteiligen Verfahren bezüglich einer beaufschlagten Kraft instabil sind. Zudem ist es besonders nachteilhaft, dass entsprechende Arbeitsschritte zum Fräsen bzw. Bohren während des Auswuchtprozesses durchgeführt werden und nicht bereits zum Herstellungszeitpunkt des Elektromotors durchgeführt werden. Zudem ist das Abfräsen von Material typischerweise irreversibel.

Bei einem positiven Auswuchten tritt die Problematik auf, dass zusätzliche Wuchtgewichte gemäß dem Stand der Technik oftmals derart eingebracht werden, dass diese gerade bei großen auftretenden Kräften während des Betriebs des Elektromotors nicht verlässlich fixiert werden, derart, dass sich diese eventuell nach einiger Zeit ablösen können. So sind Verfahren bekannt, bei denen Wuchtelemente aus der Baugruppe des Innenläufers heraustreten und somit ggf. abgebrochen werden können. Weiterhin sind Verfahren bekannt, bei denen eine Klebeverbindung derart angebracht wird, dass die Wuchtelemente an geeigneter Stelle an der Baugruppe fixiert werden. Hierbei ist jedoch zu bedenken, dass gerade unter Temperatureinwirkung eine Klebeverbindung typischerweise instabil wird bzw. werden kann und somit wiederum die Fixierung der Wuchtelemente nicht ausreichend zuverlässig vonstatten geht.

Gerade bei einem Auswuchten von Rotoren bzw. bei einem Herstellen von solchen Rotoren sucht der Fachmann stets nach verbesserten Lösungen, die es ermöglichen, mit geringem technischen Aufwand das Wuchten durchzuführen bzw. dieses bereits zum Herstellungszeitpunkt des Motors vorzubereiten. Dies ist insbesondere deshalb der Fall, da bei einer ungünstigen bzw. unsymmetrischen Gewichtsverteilung von Rotationselementen große Kräfte entstehen können, die wiederum das einwandfreie Funktionieren des Elektromotors als solchen gefährden. Hierzu wird in besonders aufwändigen Verfahren ein Auswuchten betrieben, um eben Schaden von einem Elektromotor abzuwenden.

Es ist daher eine Aufgabe der vorliegenden Erfindung, ein Verfahren vorzuschlagen, welches es mit geringem technischen Aufwand ermöglicht, ein Wuchten eines Innenläufers durchzuführen bzw. bereits zum Herstellungsprozess des Innenläufers vorzubereiten. Hierbei ist es notwendig, dass die Wuchtelemente mit einfachen technischen Mitteln zur Wuchtung platziert werden können und zudem diese derart starr fixiert werden, dass die Wuchtelemente dauerhaft mit der auszuwuchtenden Baugruppe verbunden sind. Es ist ferner eine Aufgabe der vorliegenden Erfindung, eine entsprechend eingerichtete Fertigungsvorrichtung bereitzustellen, welche das Verfahren ausführt bzw. mittels des vorgeschlagenen Verfahrens betrieben wird. Ferner ist es eine Aufgabe der vorliegenden Erfindung, einen entsprechend dem Verfahren ausgestalteten Innenläufer vorzuschlagen sowie einen Elektromotor bereitzustellen, welcher den Innenläufer aufweist. Ferner ist es eine Aufgabe der vorliegenden Erfindung, ein Computerprogrammprodukt mit Steuerbefehlen bereitzustellen, welche das vorgeschlagene Verfahren implementieren bzw. die vorgeschlagene Fertigungsvorrichtung betreiben.

Die Aufgabe wird gelöst durch ein Verfahren zum Herstellen eines positiv wuchtbaren Innenläufers gemäß den Merkmalen des Patentanspruchs 1. Weitere vorteilhafte Ausgestaltungen werden in den Unteransprüchen angegeben.

Demgemäß wird ein Verfahren zum Herstellen eines positiv wuchtbaren Innenläufers zur Verwendung in einem Elektromotor vorgeschlagen, aufweisend ein Bereitstellen eines Rotorblechpakets, ein Umspritzen des bereitgestellten Rotorblechpakets mit einem thermoplastischen Kunststoff, wobei ein Ausgestalten der Kunststoffumspritzung derart erfolgt, dass an mindestens einer Stirnseite des Rotorblechpakets Aussparungen zur Aufnahme von Wuchtelementen ausgeformt werden.

Ein elektrischer Motor, der als ein sogenannter Innenläufer ausgeformt ist, weist einen Rotor und einen Stator auf, der den Rotor unter Bildung eines ringförmigen Luftspalts konzentrisch umgibt. Hierbei trägt der Stator eine üblicherweise aus mehreren Spulen gebildete, mehrphasige, insbesondere dreiphasige Feldwicklung zur Erzeugung eines Magnetfelds, in dem der dann üblicherweise mit Permanentmagneten versehene Rotor zur Erzeugung einer Rotorkraft rotiert. Der Rotor ist hierbei in der Regel aus einem von einer Rotorwelle bzw. Maschinenwelle getragenen wellenfesten Blechpaket mit einer Vielzahl von Einzelblechen gebildet. Hierzu sind typischerweise Permanentmagnete in eine Anzahl von Ausnehmungen in der Baugruppe angebracht. Somit umfasst der erfindungsgemäße Elektromotor ein Rotorblechpaket mit mehreren Magneten, wobei das Rotorblechpaket drehfest mit einer Welle verbunden ist.

Da jedoch ein Rotorblechpaket nicht komplett dicht ist, wird typischerweise ein solches Rotorblechpaket mit einem thermoplastischen Kunststoff umspritzt. Hierdurch sollen beispielsweise Korrosionserscheinungen vermieden werden. Ansonsten könnten die Bestandteile des Rotors, insbesondere die Magnete, von Flüssigkeiten angegriffen werden. Ferner würden eindringende Flüssigkeiten wiederum zu Unwuchterscheinungen führen.

Rotierende Körper, beispielsweise ein Innenläufer bzw. das Rotorblechpaket, rotieren zeitweise mit hoher Geschwindigkeit und sind auch für die Rotation bei verschiedenen Rotationsgeschwindigkeiten vorgesehen. Hierbei sind verschiedene Arten von Lagerung vorgesehen, die einerseits kontinuierliche radiale und axiale Belastungen eines Rotors aufnehmen, andererseits auch unregelmäßige Kräfte, wie beispielsweise die durch ein Auseinanderfallen der tatsächlichen Rotationsachse und der idealen Trägheitsachse bzw. Kreiselachse eines Körpers entstehenden Kräfte. Somit wirken innerhalb eines Elektromotors typischerweise Kreiselkräfte, die auch als Unwucht bezeichnet werden und typischerweise durch das Einbringen von Wuchtgewichten an geeigneter Stelle vermieden werden. Hierbei wurde erfindungsgemäß erkannt, dass das Umspritzen des Rotorblechpakets mit thermoplastischen Kunststoffen bereits dafür genutzt werden kann, entsprechende Aussparungen an der Baugruppe anzubringen, die in weiteren Verfahrensschritten erfindungsgemäß dazu genutzt werden können, Wuchtelemente zu platzieren.

So wird erfindungsgemäß der Rotor, welcher auch als Innenläufer bezeichnet wird, derart bereitgestellt, dass beispielsweise ein herkömmliches Rotorblechpaket derart mit thermoplastischem Kunststoff umspritzt wird, dass Aussparungen entstehen, die geeignet sind, Wuchtelemente, wie beispielsweise Stahlkugeln, aufzunehmen. Somit ist es besonders vorteilhaft, dass erfindungsgemäß bekannte Rotorblechpakete derart wiederverwendet werden können, dass diese lediglich dadurch verbessert werden, dass die Kunststoffumspritzung erfindungsgemäß ausgestaltet wird. So wird erfindungsgemäß ein Innenläufer bzw. ein Verfahren zum Herstellen eines solchen Innenläufers vorgeschlagen, welcher sich zum Einsatz in einem Elektromotor, vorzugsweise einem Gleichstrommotor, eignet. Hierbei erkennt der Fachmann, dass weitere herkömmliche Komponenten vorzuhalten sind, wie beispielsweise ein Stator, der im Zusammenwirken mit dem Innenläufer bzw. dem Rotor einen Elektromotor bereitstellt.

Das Rotorblechpaket umfasst u.a. Dauermagneten, welche mittels weiterer herkömmlicher Komponenten derart mit magnetischen Kräften beaufschlagt werden, dass sich das Rotorblechpaket rotierend in Bewegung setzt und um die Längsachse des Rotorblechpakets rotiert. Somit kann generell der Verfahrensschritt des Bereitstellens des Rotorblechpakets dadurch erfolgen, dass ein bekanntes Rotorblechpaket bereitgestellt wird und der darauffolgende Umspritzvorgang derart abgewandelt wird, dass an mindestens einer Stirnseite des Rotorblechpakets, vorzugsweise an beiden Stirnseiten, eine Mehrzahl an Aussparungen zur Aufnahme von Wuchtelementen ausgeformt wird. Bei dieser Mehrzahl kann es sich um eine Anzahl von 3 bis 100 Aussparungen für Wuchtelemente handeln. Hierbei orientiert sich die Anzahl der Aussparungen an allgemein bekannten Ausgestaltungen, wobei beispielsweise 40 bis 50 Aussparungen vorzusehen sind. Hierbei erkennt der Fachmann, dass er die Anzahl der Aussparungen in Abhängigkeit der Abmessung des Rotorblechpakets entsprechend wählt. So sind auch bei entsprechend größeren Elektromotoren größere Anzahlen von Aussparungen notwendig, und bei kleineren Elektromotoren entsprechend weniger Aussparungen.

Auch ist es vorteilhaft, in Abhängigkeit der Abmessungen des Elektromotors bzw. des Rotorblechpakets, welches zu wuchten ist, die Größe der Wuchtelemente entsprechend zu wählen. Erfindungsgemäß ist es somit möglich, die eingebrachten Aussparungen bereits in ihrer Größe und Geometrie derart zu wählen, dass vorbestimmte Wuchtelemente hierin platziert werden können.

Das Ausgestalten der Kunststoffumspritzung erfolgt derart, dass an mindestens einer Stirnseite des Rotorblechpakets Aussparungen zur Aufnahme von Wuchtelementen ausgeformt werden. Generell ist dies dadurch möglich, dass die Kunststoffumspritzung selbst bereits Aussparungen aufweist, die also während des Spritzvorgangs eingebracht werden, oder aber, dass ein herkömmliches Umspritzen erfolgt und nachträglich die Aussparungen eingebracht werden. So ist es möglich, dass der Vorgang des Umspritzens und des Ausgestaltens der Kunststoffumspritzung derart erfolgt, dass beide Verfahrensschritte zusammenfallen. Somit umfasst ein Umspritzen des bereitgestellten Rotorblechpakets ein Ausgestalten der Kunststoffumspritzung. Dies kann beispielsweise dadurch erfolgen, dass während des Umspritzvorgangs bereits Elemente an das Rotorblechpaket herangeführt bzw. angelegt werden, welche nach dem Umspritzvorgang wieder entfernt werden. Somit bleiben Aussparungen zurück, die die Geometrie solcher Elemente aufweisen. Beispielsweise kann der thermoplastische Kunststoff durch Temperatureinwirkung solange erhitzt werden, dass das Rotorblechpaket umspritzt werden kann und zusätzlich entsprechende Aussparelemente herangeführt werden. Vor einem Auskühlen und somit Aushärten des thermoplastischen Kunststoffs können dann entsprechende Elemente wieder entfernt werden, so dass die Kunststoffumspritzung aushärtet, ohne dass sich die hierbei geschaffenen Aussparungen wieder verschließen.

Additiv oder alternativ ist es auch möglich, eine herkömmliche Umspritzung durchzuführen und diese in einem darauffolgenden Verfahrensschritt derart zu variieren, dass Aussparungen in die herkömmliche Umspritzung eingebracht werden. So ist es beispielsweise möglich, mittels Bohrens oder Fräsens in die herkömmliche Umspritzung entsprechende Aussparungen einzubringen. Das Einbringen von Aussparungen impliziert, dass die Aussparungen nach außen hin geöffnet sind, dass sich also kein geschlossener Hohlraum bildet, da ansonsten die Wuchtelemente nicht in die Aussparung einbringbar wären. Somit ist also stets sicherzustellen, dass die Aussparungen derart ausgestaltet werden, dass Wuchtelemente in diese hineingepresst bzw. hineingedrückt werden können. Die Aussparungen eignen sich dann zur Aufnahme von Wuchtelementen, wobei Wuchtelemente vorzugsweise formbündig in die Aussparungen eingebracht werden können. Werden die Wuchtelemente nicht formschlüssig in die Aussparung eingebracht, so sind ggf. weitere Füllmaterialien oder Arbeitsschritte notwendig.

Gemäß einem Aspekt der vorliegenden Erfindung erfolgt das Ausformen von Aussparungen während des Umspritzens. Dies hat den Vorteil, dass das Umspritzen und das Ausgestalten bereits in einem einzelnen Herstellungsschritt durchgeführt werden kann und das Umspritzen bereits derart erfolgt, dass Aussparungen zur Aufnahme von Wuchtelementen ausgeformt werden. Dies ist insbesondere deshalb vorteilhaft, da durch das Zusammenfallen der beiden Arbeitsschritte ein besonders effizientes Verfahren geschaffen wird, welches es vermeidet, dass Aussparungen im Nachgang zum Umspritzen geschaffen werden müssen, derart, dass erst das thermoplastische Kunststoffmaterial aushärten muss und anschließend die Aussparungen eingebracht werden. Somit wird die gewünschte Ausgangsform bereits beim Umspritzen an das Rotorblechpaket angespritzt.

Gemäß einem weiteren Aspekt der vorliegenden Erfindung erfolgt das Ausformen von Aussparungen im Nachgang zu dem Umspritzen. Dies hat den Vorteil, dass ein herkömmlicher Umspritzvorgang durchgeführt werden kann, ohne dass entsprechende Fertigungsmaschinen angepasst werden müssen und in einem darauffolgenden Verfahrensschritt dann das Ausgestalten separat erfolgt. Hierbei ist es besonders vorteilhaft, dass das Ausformen von Aussparungen sowohl während des Umspritzens als auch im Nachgang zu dem Umspritzen erfolgen kann. Beispielsweise wird eine erste Menge von Aussparungen während des Umspritzens angebracht, und eine zweite Menge von Aussparungen wird im Nachgang zu dem Umspritzen angebracht. So ist es also möglich, beide Techniken derart zu kombinieren, dass Aussparungen letztendlich vorliegen, welche mittels unterschiedlicher Ausgestaltungen des vorgeschlagenen Verfahrens umgesetzt werden. Der Fachmann erkennt hierbei, wie er im Nachgang des Umspritzens die Aussparungen beispielsweise mittels Bohrens oder Fräsens ausformt. Hierbei ist es insbesondere vorteilhaft, dass das Wuchten nicht durch das Fräsen bzw. Bohren an sich erfolgt, wie es im Stand der Technik bereits gezeigt ist, sondern vielmehr werden mittels dem Fräsen bzw. dem Bohren Aussparungen geschaffen, die dann erst bewirken, dass Wuchtelemente eingebracht werden können. So ist das vorgeschlagene Fräsen bzw. Bohren nicht als ein Wuchten als solches zu bezeichnen.

Gemäß einem weiteren Aspekt der vorliegenden Erfindung erfolgt das Ausformen der Aussparungen mittels Bohrens. Dies hat den Vorteil, dass herkömmliche Verfahren Wiederverwendung finden können und dass auf besonders effiziente Art und Weise kreisrunde Aussparungen hergestellt werden können, in die die Wuchtelemente eingesetzt werden können. Dies ist insbesondere vorteilhaft, falls die Wuchtelemente als Kugeln, beispielsweise Stahlkugeln, vorliegen. Somit ist es also möglich, solche Kugeln in die Bohrungen einzubringen und diese in den Aussparungen zu fixieren.

Gemäß einem weiteren Aspekt der vorliegenden Erfindung erfolgt das Ausformen der Aussparungen in Abhängig einer Abmessung einzubringender Wuchtelemente. Dies hat den Vorteil, dass die Aussparungen im Wesentlichen die gleiche Geometrie aufweisen können wie die Wuchtelemente. Somit ist es möglich, die Wuchtelemente lediglich einzustecken und die Wuchtelemente derart formschlüssig in die vorgesehene Geometrie einzubringen, dass sich diese dort verklemmen. Somit kann mit geringem technischem Aufwand ein Fixieren der Wuchtelemente erfolgen.

Gemäß einem weiteren Aspekt der vorliegenden Erfindung wird an mindestens einer Stirnseite des Rotorblechpakets eine scheibenförmige Kontur ausgeformt, in welche die Aussparungen eingebracht werden. Dies hat den Vorteil, dass eine separate Hervorhebung geschaffen wird, in die Bohrungen bzw. Aussparungen eingebracht werden können. Somit wird an einer oder an beiden Stirnseiten des Rotorblechpakets zusätzliches Material geschaffen, das breit genug ausgestaltet wird, so dass dieses zusätzliche Material die Aussparungen aufnehmen kann. Somit ist es auch möglich, die scheibenförmige Kontur in ihrer Stärke derart auszugestalten, dass die gewünschte Tiefe der Aussparung ausgeformt werden kann. So ist bei einer tieferen Aussparung eben auch die scheibenförmige Kontur entsprechend in ihrem Querschnitt breiter auszugestalten.

Gemäß einem weiteren Aspekt der vorliegenden Erfindung werden die Aussparungen koaxial zur Achse des Rotorblechpakets ausgeformt. Dies hat den Vorteil, dass in einfacher Art und Weise die Wuchtelemente derart platziert werden können, dass eine symmetrische Gewichtsverteilung entsteht, die eine Unwucht verhindert. Somit werden also die Aussparungen kreisrund auf dem Rotorblechpaket bzw. auf der Kunststoffumspritzung angeordnet.

Gemäß einem weiteren Aspekt der vorliegenden Erfindung erfolgt in einem weiteren Verfahrensschritt ein Auswuchten des umspritzten Rotorblechpakets derart, dass Wuchtelemente in die dafür vorgesehenen Aussparungen eingebracht werden. Dies hat den Vorteil, dass der Herstellungsprozess derart erweitert wird, dass abschließend ein ausgewuchtetes Rotorelement zur Verfügung steht. Ein Einbringen der Wuchtelemente bzw. Wuchtgewichte in die dafür vorgesehenen Aussparungen kann beispielsweise derart erfolgen, dass die Wuchtelemente in die Aussparungen eingepresst bzw. eingedrückt werden. Der Fachmann erkennt hierbei, wie er in Abhängigkeit der verwendeten Wuchtelemente ein Einbringen eben dieser in die Aussparungen ausführt. So sind diverse Materialien bekannt, welche sich als Wuchtgewicht eignen, die dann in Abhängigkeit ihrer Materialbeschaffenheit in die Aussparungen eingebracht werden.

Gemäß einem weiteren Aspekt der vorliegenden Erfindung finden zum Auswuchten Kugeln, insbesondere Metallkugeln oder Stahlkugeln, als Wuchtelemente Verwendung. Dies hat den Vorteil, dass bereits bestehende Wuchtelemente Wiederverwendung finden können und diese besonders günstig, also mit wenig technischem Aufwand, bereitgestellt werden können. So sind besonders Kugeln in einfacher Art und Weise in eine Aussparung einzubringen und eignen sich insbesondere bei einer Verwendung von Bohrungen als Aussparungen. So können die Kugeln derart ausgestaltet werden, dass sie formschlüssig mit den Bohrungen abschließen und einfach in der Bohrung verklemmt werden können. Insbesondere Metallkugeln oder Stahlkugeln weisen ein besonders vorteilhaftes Verhalten als Wuchtelemente auf, da diese ein relativ hohes Gewicht aufweisen und somit eine unsymmetrische Materialverteilung ausgleichen können.

Gemäß einem weiteren Aspekt der vorliegenden Erfindung werden in einem weiteren Verfahrensschritt die Wuchtelemente in der Kunststoffumspritzung fixiert. Dies hat den Vorteil, dass in diesem optionalen Verfahrensschritt weitere Kleber bzw. Füllelemente eingebracht werden können. Typischerweise kann das erfindungsgemäße Verfahren derart ausgeführt werden, dass die Wuchtelemente bereits in den Aussparungen formschlüssig derart zum Liegen kommen, dass diese sich dort verklemmen. Somit ist es dann nicht mehr notwendig, einen weiteren Verfahrensschritt des Fixierens durchzuführen. Dies kann jedoch zumindest zur Sicherheit vorgesehen werden, da somit sichergestellt wird, dass über die gesamte Laufzeit des Elektromotors die Wuchtelemente auch tatsächlich an gewünschter Stelle fixiert bleiben.

Gemäß einem weiteren Aspekt der vorliegenden Erfindung umfasst das Fixieren ein Heißverstemmen der Wuchtelemente. Dies hat den Vorteil, dass mit geringem technischen Aufwand und bereits bekannten Verfahren erfindungsgemäß der technische Effekt herbeigeführt wird, dass die Wuchtelemente tatsächlich auch in der Aussparung fixiert bleiben. Unter einem Heißverstemmen versteht man generell die dauerhafte und formschlüssige bzw. kraftschlüssige und teilweise darüber hinaus stoffschlüssige Verbindung zwischen zwei Elementen. Somit wird eine besonders effiziente Alternative zum Kleben bzw. Löten oder Schrauben geschaffen. Alternativ wird ein Heißverstemmen auch als Heißprägen bezeichnet, worauf die vorliegende Erfindung ebenfalls gerichtet ist. Das Heißverstemmen kann derart erfolgen, dass die Wuchtelemente direkt heißverstemmt werden, falls diese aus einem geeigneten, formbaren Material bestehen. Ferner ist es jedoch auch möglich, weitere Elemente einzubringen, welche dann heißverstemmt werden. Beispielsweise kann ein Füllmaterial nach dem Wuchtelement in die Aussparung eingebracht werden und dieses dann derart heißverstemmt werden, dass die Aussparung verschlossen wird und somit das Wuchtelement fixiert wird. Der Fachmann erkennt hierbei weitere Verfahren, wie er das Wuchtelement mittels Heißverstemmens in der Aussparung fixieren kann.

Die Aufgabe wird auch gelöst durch eine Fertigungsvorrichtung zur Herstellung eines positiv wuchtbaren Innenläufers zur Verwendung in einem Elektromotor, aufweisend eine Fertigungseinheit, eingerichtet zum Bereitstellen eines Rotorblechpakets, sowie eine Umspritzeinheit, eingerichtet zum Umspritzen des bereitgestellten Rotorblechpakets mit einem thermoplastischen Kunststoff, wobei die Fertigungsvorrichtung eingerichtet ist zum Ausgestalten der Kunststoffumspritzung, derart, dass an mindestens einer Stirnseite des Rotorblechpakets Aussparungen zur Aufnahme von Wuchtelementen ausformbar sind.

Die Aufgabe wird auch gelöst durch einen Innenläufer zur Verwendung in einem Elektromotor, aufweisend ein Rotorblechpaket, wobei das Rotorblechpaket mit einem thermoplastischen Kunststoff derart umspritzt ist, dass an mindestens einer Stirnseite des Rotorblechpakets Aussparungen zur Aufnahme von Wuchtelementen ausgeformt sind. Insbesondere wird ein Innenläufer vorgeschlagen, welcher gemäß dem beschriebenen Verfahren hergestellt wird.

Die Aufgabe wird auch gelöst durch einen Elektromotor, aufweisend einen Stator und einen Innenläufer, wie er bereits beschrieben wurde.

Der Begriff des Innenläufers wird in der Literatur unterschiedlich verwendet, wobei teilweise Elektromotoren als Innenläufer bezeichnet werden, die einen Stator und einen Rotor aufweisen. In alternativer Literatur wird jedoch auch der Rotor bereits an sich als Innenläufer beschrieben, da dieser Rotor rotierend in dem Stator gelagert ist und somit bildlich in dem Stator innen läuft.

Vorliegend ist ein Innenläufer derart zu verstehen, dass dieser den Rotor darstellt. Somit ist ein Innenläufer im Kontext der vorliegenden Erfindung derart zu verstehen, dass es sich hierbei um diejenige Baugruppe handelt, die u. a. Permanentmagnete aufweist, welche in entsprechende Hohlräume, auch als Taschen bezeichnet, eingebracht sind. Somit wird ein Innenläufer als ein Rotor, ein Rotorelement oder ganz allgemein als das Gegenstück zu dem Stator bezeichnet. Der Fachmann erkennt hierbei, dass er im Kontext der vorliegenden Erfindung den Begriff des Innenläufers auch als einen Rotor, ein Rotorelement oder eine Rotorbaugruppe bezeichnen kann. Somit wird also ein Innenläufer zur Verwendung in einem Elektromotor vorgeschlagen.

Die Aufgabe wird auch gelöst durch ein Computerprogrammprodukt mit Steuerbefehlen, welche das vorgeschlagene Verfahren implementieren bzw. die vorgeschlagene Fertigungsvorrichtung betreiben.

Erfindungsgemäß ist es besonders vorteilhaft, dass die Merkmale des Verfahrens auch in struktureller Art und Weise in der vorgeschlagenen Fertigungsvorrichtung Niederschlag finden können. So ist generell das Verfahren geeignet, die Fertigungsvorrichtung zu betreiben bzw. die Fertigungsvorrichtung kann das Verfahren ausführen. So erkennt der Fachmann, dass er Verfahrensschritte analog als strukturelle Merkmale in der Fertigungsvorrichtung vorsehen kann. Der Innenläufer wird hergestellt durch die vorgeschlagene Fertigungsvorrichtung bzw. durch das vorgeschlagene Verfahren. Analog wird auch der Elektromotor mittels der Fertigungsvorrichtung oder zumindest unter Verwendung der Fertigungsvorrichtung vorgeschlagen. Somit weist auch der Innenläufer implizit alle Verfahrensmerkmale als strukturelle Merkmale auf.

Weitere vorteilhafte Ausgestaltungen werden mit Bezug auf die beigefügten
Figuren näher erläutert. Es zeigen:
   - Fig. 1:: ein Rotorblechpaket, wie es gemäß einem Aspekt der vorliegenden Erfindung Einsatz findet, in einer isometrischen Ansicht;
   - Fig. 2:: ein Rotorblechpaket, welches mit Permanentmagneten bestückt ist in einer stirnseitigen Ansicht, wie es gemäß einem Aspekt der vorliegenden Erfindung Einsatz findet;
   - Fig. 3:: ein bestücktes Rotorblechpaket mit angespritzter Geometrie zur Aufnahme von Wuchtkugeln gemäß einem Aspekt der vorliegenden Erfindung;
   - Fig. 4:: ein bestücktes und umspritztes Rotorblechpaket, in einem Längsschnitt gemäß einem Aspekt der vorliegenden Erfindung;
   - Fig. 5:: ein Luftentlasskanal für eine Aussparung gemäß einem Aspekt der vorliegenden Erfindung;
   - Fig. 6:: ein gewuchteter Rotor mit eingepresster Wuchtkugel gemäß einem Aspekt der vorliegenden Erfindung; und
   - Fig. 7:: ein schematisches Ablaufdiagramm eines Verfahrens zum Herstellen eines positiv wuchtbaren Innenläufers gemäß einem Aspekt der vorliegenden Erfindung.

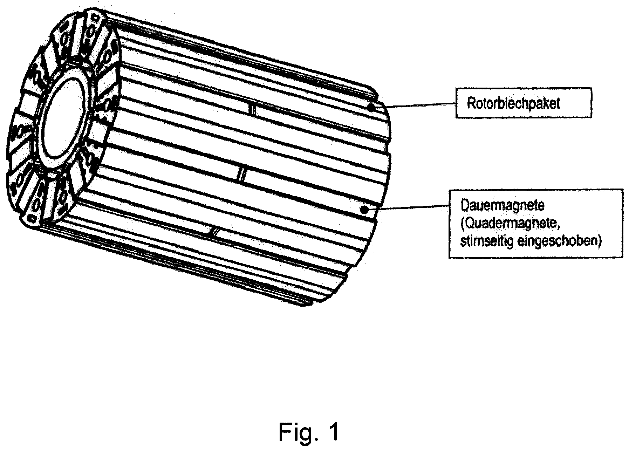

Fig. 1 zeigt ein mit Permanentmagneten bestücktes Rotorblechpaket, vorliegend mit Quadermagneten, welche stirnseitig eingeschoben sind. Somit ist in dem vorliegenden Rotorblechpaket die Stirnseite links und rechts eingezeichnet. Das Rotorblechpaket dient als Ausgangsteil zum Umspritzen und des Ausgestaltens der Kunststoffumspritzung derart, dass an einer oder beiden Stirnseiten des Rotorblechpakets Aussparungen zur Aufnahme von Wuchtelementen ausgeformt werden. Hierbei ist es besonders vorteilhaft, dass das in Fig. 1 gezeigte Rotorblechpaket als ein herkömmliches Rotorblechpaket ausgestaltet werden kann.

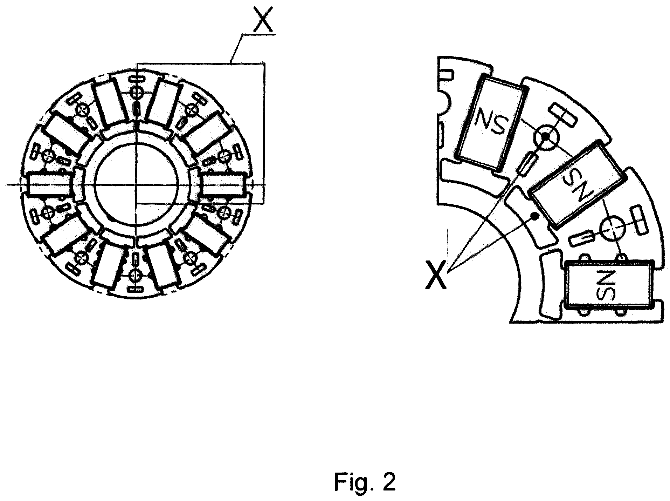

Fig. 2 zeigt auf der linken Seite ein mit Permanentmagneten bestücktes Rotorblechpaket, welches in einer Detailansicht gemäß Ausschnitt X näher erläutert ist. Insbesondere zeigt der Ausschnitt auf der rechten Seite mittels der eingetragenen Linien die Längsöffnungen durch das Rotorblechpaket hindurch, in welche später der Kunststoff eingespritzt wird. Bei dem Einspritzen handelt es sich gemäß einem Aspekt der vorliegenden Erfindung um das Umspritzen des bereitgestellten Rotorblechpakets.

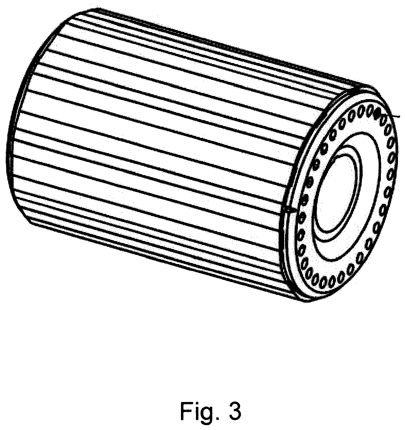

Fig. 3 zeigt das bereits umspritzte Rotorblechpaket und zeigt insbesondere auf der rechten Seite die Stirnseite des bestückten Rotorblechpakets mit der Kunststoffumspritzung. Die Kunststoffumspritzung umfasst stirnseitig die angespritzte Geometrie zur Aufnahme der Wuchtkugeln. Wie in Fig. 3 ersichtlich ist, ist es möglich, die Aussparungen derart geometrisch auszugestalten, dass Kugeln als Wuchtelemente Verwendung finden können. In die Aussparungen, wie sie auf der rechten Seite gezeigt sind, können zur Auswuchtung einzelne Wuchtelemente eingebracht werden.

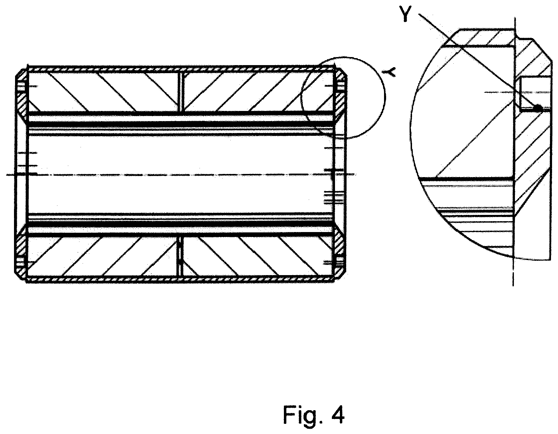

Fig. 4 zeigt in einem Längsschnitt ein bestücktes Rotorblechpaket, welches bereits umspritzt ist, vorliegend mit thermoplastischen Kunststoff. Die vorliegende Erfindung ist hierbei lediglich gemäß einem Aspekt auf thermoplastischen Kunststoff als Umspritzung gerichtet. Auf der rechten Seite in der

Fig. 4 ist eine Vertiefung in der Detailansicht Y gezeigt, um Luft aus der Bohrung beim Einpressen der Wuchtkugel zu verdrängen. Somit ist also in der Aussparung eine Vertiefung vorgesehen, welche geeignet ist, die Luft entweichen zu lassen, welche bei einem Einpressen des Wuchtelements oder allgemein dem Einbringen des Wuchtelements entweicht. Das bestückte Rotorblechpaket gemäß Fig. 3 und 4 kann allgemein auch als Innenläufer bezeichnet werden.

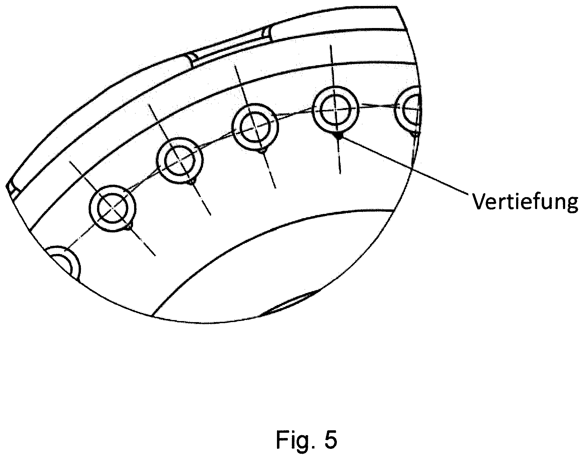

Fig. 5 zeigt in einer Detailansicht einen Luftentlasskanal und eine entsprechende Vertiefung, um Luft aus der Bohrung beim Einpressen der Wuchtkugel entweichen zu lassen.

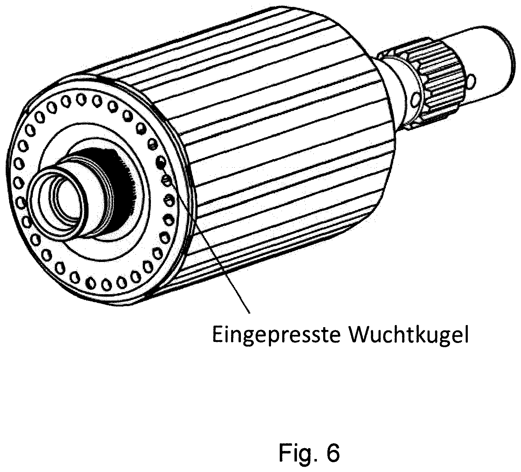

Fig. 6 zeigt einen gewuchteten Rotor bzw. einen Innenläufer, mit eingepresster Wuchtkugel. Je nach auszugleichender Unwucht kann es auch notwendig sein, in mehrere Bohrungen Kugeln einzupressen. Somit sind in der vorliegenden Fig. 6 auf der linken Seite, also der Stirnseite, mehrere Aussparungen eingezeichnet, welche mittels der Kunststoffumspritzung bereitgestellt werden.

Während aufgrund der gewählten Perspektiven lediglich stets eine Stirnseite gezeigt wird, ist es ferner auch möglich, dass beispielsweise auch auf der in der Fig. 6 verdeckten Stirnseite entsprechende Aussparungen vorgesehen werden. Somit ist es auch möglich, die Kunststoffumspritzung derart auszugestalten, dass an zwei Stirnseiten, also beiden Stirnseiten, des Rotorblechpakets Aussparungen zur Aufnahme von Wuchtelementen ausgeformt werden.

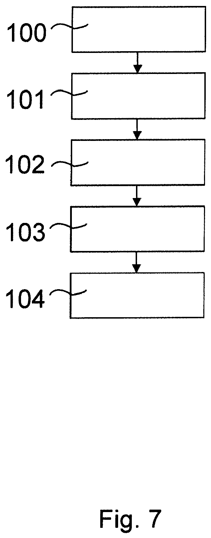

Fig. 7 zeigt in einem schematischen Ablaufdiagramm ein Verfahren zum Herstellen eines positiv wuchtbaren Innenläufers zur Verwendung in einem Elektromotor, aufweisend die Schritte des Bereitstellens 100 eines Rotorblechpakets, des Umspritzens 101 des bereitgestellten Rotorblechpakets mit einem thermoplastischen Kunststoff, und des Ausgestaltens 102 der Kunststoffumspritzung, derart, dass an mindestens einer Stirnseite des Rotorblechpakets Aussparungen zur Aufnahme von Wuchtelementen ausgeformt werden. In weiteren optionalen Verfahrensschritten erfolgt ein Auswuchten 103 des Innenläufers sowie ein Fixieren 104 der Wuchtelemente in der Kunststoffumspritzung. Der Fachmann erkennt hierbei, dass er einzelne Verfahrensschritte iterativ und/oder in anderer Reihenfolge ausführen kann.

Somit wird also eine geschickte Nutzung der Kunststoffumspritzung eines Rotors einer elektrischen Maschine vorgeschlagen, dergestalt, dass die Umspritzung stirnseitig so ausgeprägt ist, dass geeignete Wuchtgewichte aufgenommen werden können. Die in entsprechenden Öffnungen aufgenommenen Wuchtgewichte, vorzugsweise Kugeln, welche in kreisrunde Bohrungen eingepresst werden, können anschließend noch durch Heißverstemmen des Kunststoffs formschlüssig gegen Lösen gesichert werden. Somit wird also die Kunststoffumspritzung derart heißverstemmt, dass beispielsweise eine Metallkugeln in der Aussparung fixiert wird.

Beim Umspritzen des mit den Dauermagneten bestückten Rotorblechpakets mit dem thermoplastischen Kunststoff wird im konkreten Anwendungsfall an beiden Stirnseiten des Blechpakets eine zylindrische scheibenförmige Kontur mit angespritzt. Diese Kontur weist eine Reihe von Öffnungen koaxial angeordnet zur Achse des Blechpakets auf. Im vorliegenden Fall sind dies einfache kreisrunde Öffnungen bzw. Bohrungen. Mittels dieser Bohrungen kann der fertig montierte Rotor, nachdem das umspritzte Blechpaket auf die Motorwelle montiert wurde, gewuchtet werden. Das Wuchten geschieht positiv, indem Wuchtgewichte, im vorliegenden Fall handelsübliche Stahlkugeln, entsprechend der zu beseitigenden Unwucht in die dafür relevante Bohrung bzw. Bohrungen eingedrückt werden. Optional können die eingedrückten Kugeln auch durch Heißprägen bzw. Heißverstemmen relativ einfach und effizient gegen Verlieren gesichert werden.

Das ohnehin vorhandene Umspritzen des Rotors mit Kunststoff, um die im Rotorblechpaket eingesetzten Dauermagnete zu fixieren, wird erfindungsgemäß genutzt, um an beiden Stirnseiten des Rotors eine Geometrie zur Aufnahme der Wuchtelemente mit anzuspritzen. Gewuchtet wird somit also positiv. Die Wuchtelemente können einfache, sehr kostengünstige Metallkugeln sein. Durch Heißverstemmen bzw. Heißprägen können die Wuchtelemente zusätzlich sehr einfach und effizient formschlüssig gegen Verlieren gesichert werden. Das Verfahren arbeitet somit sauber und erzeugt keine Verschmutzung in der Fertigung bzw. Montage. Dies ist ein wesentlicher Vorteil gegenüber negativem Wuchten, bei welchem Material abgetragen wird. Das vorgeschlagene Verfahren eignet sich dadurch beispielsweise für einen mit hohen Ansprüchen an die Sauberkeit, da keine Verunreinigungen durch den Prozess verursacht werden.

## Patentansprüche

1. Verfahren zum Herstellen eines positiv wuchtbaren Innenläufers zur Verwendung in einem Elektromotor, aufweisend die Schritte:
- Bereitstellen (100) eines Rotorblechpakets;
- Umspritzen (101) des bereitgestellten Rotorblechpakets mit einem thermoplastischen Kunststoff, und
- Ausgestalten (102) der Kunststoffumspritzung derart, dass an mindestens einer Stirnseite des Rotorblechpakets Aussparungen zur Aufnahme von Wuchtelementen ausgeformt werden.

2. Verfahren nach Anspruch 1, **dadurch gekennzeichnet, dass** das Ausformen (102) von Aussparungen während des Umspritzens (101) erfolgt.

3. Verfahren nach Anspruch 1 oder 2, **dadurch gekennzeichnet, dass** das Ausformen (102) von Aussparungen im Nachgang des Umspritzens (101) erfolgt.

4. Verfahren nach Anspruch 3, **dadurch gekennzeichnet, dass** das Ausformen der Aussparungen (102) mittels Bohrens erfolgt.

5. Verfahren nach einem der vorhergehenden Ansprüche, **dadurch gekennzeichnet, dass** das Ausformen (102) der Aussparungen in Abhängigkeit einer Abmessung einzubringender Wuchtelemente erfolgt.

6. Verfahren nach einem der vorhergehenden Ansprüche, **dadurch gekennzeichnet, dass** an mindestens einer Stirnseite des Rotorblechpakets eine scheibenförmige Kontur ausgeformt wird, in welche die Aussparungen eingebracht werden.

7. Verfahren nach einem der vorhergehenden Ansprüche, **dadurch gekennzeichnet, dass** die Aussparungen koaxial zur Achse des Rotorblechpakets angeordnet werden.

8. Verfahren nach einem der vorhergehenden Ansprüche, **dadurch gekennzeichnet, dass** in einem weiteren Verfahrensschritt ein Auswuchten (103) des umspritzten Rotorblechpakets derart erfolgt, dass Wuchtelemente in die dafür vorgesehenen Aussparungen eingebracht werden.

9. Verfahren nach Anspruch 8, **dadurch gekennzeichnet, dass** zum Auswuchten (103) Kugeln, insbesondere Metallkugeln oder Stahlkugeln, als Wuchtelemente Verwendung finden.

10. Verfahren nach Anspruch 8 oder 9, **dadurch gekennzeichnet, dass** in einem weiteren Verfahrensschritt die Wuchtelemente in der Kunststoffumspritzung fixiert (104) werden.

11. Verfahren nach Anspruch 10, **dadurch gekennzeichnet, dass** das Fixieren (104) ein Heißverstemmen der Wuchtelemente umfasst.

12. Fertigungsvorrichtung zur Herstellung eines positiv wuchtbaren Innenläufers zur Verwendung in einem Elektromotor, aufweisend:
- eine Fertigungseinheit eingerichtet zum Bereitstellen (100) eines Rotorblechpakets;
- eine Umspritzeinheit eingerichtet zum Umspritzen (101) des bereitgestellten Rotorblechpakets mit einem thermoplastischen Kunststoff, **dadurch gekennzeichnet, dass** die Fertigungsvorrichtung eingerichtet ist zum Ausgestalten (102) der Kunststoffumspritzung derart, dass an mindestens einer Stirnseite des Rotorblechpakets Aussparungen zur Aufnahme von Wuchtelementen ausformbar sind.

13. Innenläufer zur Verwendung in einem Elektromotor, aufweisend ein Rotorblechpaket, **dadurch gekennzeichnet, dass** das Rotorblechpaket mit einem thermoplastischen Kunststoff umspritzt ist, wobei an mindestens einer Stirnseite des Rotorblechpakets Aussparungen zur Aufnahme von Wuchtelementen in dem thermoplastischen Kunststoff ausgeformt sind.

14. Elektromotor aufweisend einen Stator und einen Innenläufer nach Anspruch 13.

15. Computerprogrammprodukt mit Steuerbefehlen, welche das Verfahren gemäß einem der Ansprüche 1 bis 11 implementieren.
